# NEUE EUROPÄISCHE PATENTSCHRIFT

(11) **EP 0 210 378 B2**
(45) Veröffentlichungstag und Bekanntmachung des Hinweises auf die Entscheidung über den Einspruch: **20.09.1995**
(45) Hinweis auf die Patenterteilung: 06.05.1992
(21) Anmeldenummer: 86107523.2
(22) Anmeldetag: 03.06.1986
(51) Int. Cl.: C09B 67/26, C09B 67/54

(54) **Verfahren zur Herstellung konzentrierter Lösungen von anionischen Farbstoffen und Farbstoffadditiven**
Process for the manufacture of concentrated solutions of anionic dyes or dye additives
Procédé de fabrication de solutions concentrées de colorants et additifs pour colorants anioniques

(30) Priorität: 13.06.1985 DE 3521129
(43) Veröffentlichungstag der Anmeldung: 04.02.1987
(73) Patentinhaber: BAYER AG, 51368 Leverkusen (DE)
(72) Erfinder: Wolff, Joachim, Dr., D-5060 Bergisch-Gladbach 2 (DE); Koll, Jochen, Dipl.-Ing., D-5068 Odenthal 3 (DE); Wolf, Karlheinz, Dr., D-5090 Leverkusen (DE); Klipper, Reinhold Maria, Dr., D-5000 Köln 50 (DE); Lange, Peter Michael, Dr., D-5090 Leverkusen (DE)

(56) Entgegenhaltungen:
- EP-A- 122 224
- EP-A- 126 830
- EP-A- 184 556
- EP-A- 0 014 180
- EP-A- 0 169 811
- DE-A- 2 805 891
- FR-A- 2 416 926
- GB-A- 1 318 111
- JP-A-59 122 552
- US-A- 4 472 168
- Textilveredlung 19 (1984), Nr.11, S.309
- Textilveredlung 24 (1989), Nr. 3, S.92

## Beschreibung

Gegenstand der Erfindung ist ein Verfahren zur Herstellung konzentrierter wäßriger Lösungen von anionischen Farbstoffen und anionischen Farbstoffadditiven ausgehend von Lösungen oder Dispersionen dieser Stoffe ohne Zwischenisolierung der den Farbstoffen bzw. Additiven zugrundeliegenden freien Säuren.

Die als Ausgangsmaterialien eingesetzten salzarmen Lösungen bzw. Dispersionen werden beispielsweise dadurch gewonnen, daß man durch Wahl geeigneter Reaktionsbedingungen - etwa durch Fällungsreaktionen - bei der Synthese des Farbstoffs bzw. Additivs, einen großen Teil der störenden Salze entfernt (vgl. z.B. DE-A 2 451 257).

Eine andere Möglichkeit besteht darin, den Farbstoff bzw. das Additiv auszufällen und die Salze auszuwaschen (vgl. z.b. DE-A 3 207 534).

Vorzugsweise benutzt man jedoch solche Lösungen oder Dispersionen, wie sie unmittelbar bei der üblichen Farbrikation anfallen, und die durch ein Membrantrennverfahren, beispielsweise Ultrafiltration, von der Salzlast befreit worden sind.

Solche Verfahren sind in der Literatur relativ häufig beschrieben worden.

Gemäß EP-A 114 031 werden beispielsweise Lösungen von Na- und K-Salzen wasserlöslicher Reaktivfarbstoffe durch Membrantrennverfahren weitgehend von Ca- und Mg-Salzen befreit und mit bestimmten Puffersubstanzen versetzt.

In den angeführten Beispielen liegen die Reaktivfarbstoffe vor und nach dem Membrantrennverfahren als Na^{⊕}-Salze vor. Als Ausgangsmaterialien dienen Syntheselösungen und über NaCl und KCl isolierte Farbstoffpreßkuchen. Selbst nach Abtrennung der in diesen Materialien enthaltenen Inertsalze und Zugabe von Lösevermittlern wie ε-Caprolactam, Harnstoff u.ä. werden oftmals keine hochkonzentrierten, in der Kälte lagerstabilen Lösungen der Na^{⊕}-Reaktivfarbstoffe erhalten. Insbesondere bei längerer Lagerung in der Kälte (+5°C bis -5°C) treten dann unerwünschte Farbstoffausfällungen auf, die erst nach Rühren und bei Raumtemperatur wieder in Lösung gebracht werden können.

Aus DE-A 2 805 891 (entspricht GB-A 2 015 018) ist ein Verfahren bekannt, bei dem die anorganischen Salze der rohen Farbstofflösungen durch Dialyse und Druckpermeation mit Hilfe von Ionenaustauschmembranen entfernt, und durch Lithium- oder Ammoniumsalze ersetzt werden. Dieses Verfahren ist jedoch wegen des hohen Bedarfs an entsalztem Wasser und an den vorstehend genanten leicht löslichen Salzen ziemlich unwirtschaftlich. Die FR-A-2 416 926 beschreibt ein Verfahren zur Herstellung konzentrierter wäßriger Lösung, wobei anorganische Salze mittels eines Membrantrennprozesses getrennt werden. Aus der EP-A- 122 224 ist der Einsatz von festen sauren Ionenaustauscherharzen zur Entsalzung von Farbstofflösungen bekannt.

In der EP-A 126 830 ist schließlich ein Membrantrennverfahren beschrieben worden, das zur Durchführung des Kationenaustauschs zwecks Umwandlung der schwerlöslichen Farbsalze in leichter lösliche Salze die sogenannte Donnan-Dialyse anwendet. Nachteilig an diesem Verfahren ist die geringe Raum-/Zeitausbeute (gemäß Beispielen liegt die Betriebsdauer zwischen 72 und 96 Stunden).

Die Aufgabe der vorliegenden Erfindung bestand daher darin, konzentrierte, lagerstabile, wäßrige Lösungen der genannten Wirkstoffe, vorzugsweise ausgewählter Reaktivfarbstoffe, ohne die vorstehend erwähnten Nachteile herzustellen,

Die vorliegende Erfindung betrifft ein Verfahren zur Herstellung konzentrierter wäßriger Lösungen von anionischen Farbstoffen und anionischen Farbstoffadditiven ausgehend von Lösungen oder Dispersionen dieser Stoffe durch Austausch der die Schwerlöslichkeit verursachenden Kationen durch die Löslichkeit verbessernden Kationen ohne Zwischenisolierung der den Farbstoffen bzw. Additiven zugrundeliegenden freien Säuren, dadurch gekennzeichnet, daß man die Lösungen oder Dispersionen mit einem Membrantrennverfahren auf einen Salzgehalt ≦ 5 Gewichtsprozent entsalzt, anschließend das Retentat zwecks Kationenaustausch über einen im Reaktionsmedium unlöslichen Ionenaustauscher in Perl- oder Granulatform führt und mit einer Base, welche die zur Löslichkeitsverbesserung dienenden Kationen spendet, neutralisiert.

Es ist als ausgesprochen überraschend anzusehen, daß dieses Verfahren glatt und problemlos verläuft, da erwartet werden konnte, daß die freien Farbsäuren in den mit den Austauschharzen gefüllten Säulen ausfallen würden und die bevrzugt einzusetzenden Reaktivfarbstoffe bei Verwendung der stark sauer wirkenden Harze hydrolysiert werden.

Als Membrantrennverfahren kommen beispielsweise Reversosmose und vor allem die Ultrafiltration in Betracht. Die dabei einzusetzenden Membranen sind allgemein bekannt und z.B. in Ullmann's "Encyclopädie der technischen Chemie", 4. Auflage, Band 16, Seite 515 (Verlag Chemie Weinheim/New York, 1978) aufgeführt. Darüber hinaus kommen spezielle ionische Membranen in Betracht, wie sie z.B. in EP-A 82355, EP-A 25973 und EP 61424 beschrieben sind. Bsonders bevorzugt anzuwendene Membranen sind Porenmembranen, die ionische Gruppen enthalten, bevorzugt in Form von Farbstoffmolekülen.

Diese Membranen bestehen vorzugsweise aus Polyamid, Polysulfon, Polystyrol oder Polyvinylidenfluorid sowie deren Copolymeren.

Unter Porenmembranen werden solche verstanden, die einen Durchschnitts-Porendurchmesser von etwa 20 Å - 1 um, vorzugsweise 20 - 500 Å aufweisen.

Die erfindungsgemäß einzusetzenden ionischen Membranen, insbesondere solche. deren Aminogruppen mit Reaktivfarbstoffen modifiziert wurden, zeigen bei der Ultrafiltration hohe Farbstoffrückhaltung bei gleichzeitig hervorragendem Permeatfluß für Lösemittel und insbesondere anorganische Salze, wie NaCl oder Na₂SO₄.

Der Membrantrennprozeß kann in allen üblichen Geräten durchgeführt werden. Die Form der Membran bzw. des Moduls ist beliebig. Im allgemeinen können folgende Membran- bzw. Modulformen eingesetzt werden: Hohlfasern, Hohlfeinfasern, Tubularmembranen, Wickelmodule, Platten-Rahmen-Module u.v.a.m.

Die anzuwendenden Drücke richten sich nach den Erfordernissen des jeweiligen Moduls und der jeweiligen Membran. Vorzugsweise liegen die Drücke zwischen 5 und 60 bar.

Geeignete Ionenaustauscher sind synthetische organische Ionenaustauscher auf Kunstharz-Basis, die saure Gruppen tragen und die bevorzugt in Perlform hergestellt werden. Dazu gehören handelsübliche makroporöse oder gelförmige Perlpolymerisate auf der Basis von vernetztem Polystyrol. bei dem die Styrolkerne durch Sulfonsäuregruppen oder -CH₂SO₃H-Gruppen substituiert sind. Als Vernetzer für Styrol oder substituierte Styrole werden Polyvinylaromaten und hierbei bevorzugt Divinylbenzol eingesetzt. Ferner kommen in Betracht Perlpolymere auf Polystyrolbasis, deren Styrolkerne durch folgende Gruppen substituiert sein können:

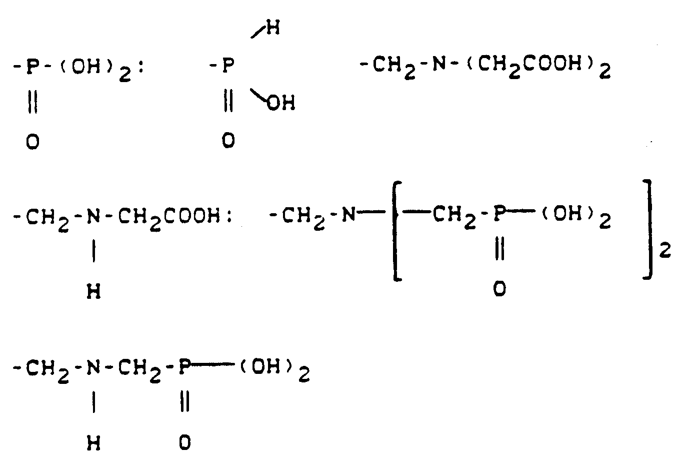

Weitere geeignete Kationenaustauscher sind solche mit -COOH-Gruppen. Dazu gehören Kationenaustauscher auf der Basis von vernetzter Acrylsäure oder vernetzter Methacrylsäure, vernetztem und anschließend verseiftem Maleinsäureanhydrid. Als Vernetzer werden Vinylaromaten (bevorzugt Divinylbenzol, Trivinylcyclohexen, Octadien-1.7 und Hexadien-1.5 sowie deren Mischungen) eingesetzt.

In Betracht kommen auch feste Ionenaustauscher mit sauren Gruppen, die durch Kondensationsreaktionen hergestellt wurden. Hierzu gehören Kationenaustauscher auf der Basis von Phenol oder Phenolderivaten, die mit Formaldehyd kondensiert wurden. Stark saure Kationenaustauscher mit Sulfonsäuregruppen entstehen durch Kondensation von am Kern sulfonierten Aromaten (Phenolsulfonsäure oder Naphthalinsulfonsäure) mit Formaldehyd. Ferner können Harze mit -CH₂-SO₃H-Gruppen auf Phenolbasis durch gleichzeitige Reaktion von HCHO, Natriumsulfit und Phenol hergestellt werden.

Kondensationsharze mit Carboxylgruppen werden durch Reaktion von HCHO mit z. B. 1,3,5 Resorcylsäure oder durch Umsetzung HCHO mit Phenoxyessigsäure, Resorcin-O-essigsäure oder analogen Verbindungen hergestellt.

In Betracht kommen auch schwach saure Harze, die durch Kondensation von Phenol oder Resorcin mit Formaldehyd hergestellt wurden. Neben den synthetischen organischen Ionenaustauschern können auch anorganische Kationenaustauscher als feste Säuren eingesetzt werden. Dazu gehören insbesondere die große Klasse der Zeolith-Minerale oder die Klasse der Glaukonite (Grünsande). Zu den Zeolithen gehören u. a. Mordenit (Ca. K₂, Na₂) [Al Si₅O₁₂]₂ · 6,6 H₂O und Natrolith Na₂[Si₃Al₂O₁₀] · 2 H₂O. Eingesetzt werden können natürliche anorganische Ionenaustauscher oder auch künstlich hergestellte anorganische Ionenaustauscher.

Kationenaustauscher der genannten Art sind in großer Zahl im Handel und in der Literatur beschrieben, vg. z. B. Ullmann's "Encyclopädie der tech. Chemie", 4. Auflage. Band 13, S. 279-346.

Als anionische Farbstoffe kommen prinzipiell alle Typen in Betracht soweit sie wasserlöslichmachende Gruppen aufweisen. Sie können den verschiedensten Klassen angehören. z. B. der Reihe der metallfreien oder metallhaltigen Mono-oder Polyazofarbstoffe, metallfreien oder metallhaltigen Azaporphinfarbstoffe wie Kupfer-, Kobalt- oder Nickelphthalocyaninfarbstoffe, der Anthrachinon-, Oxazin-, Dioxazin-, Triphenylmethan-, Nitro-, Azomethin-, metallfreie oder metallhaltigen Formazanfarbstoffe.

Diese Farbstoffe sind beispielsweise in "Colour Index" 3. Ed. Vol. 1, Seiten 1001 bis 1562 beschrieben.

Die anionischen Farbstoffe enthalten z. B. als wasserlöslichmachende Gruppe eine oder mehrere COOH-Gruppen, bevorzugt aber SO₃H-Gruppen oder deren Salze. auch anionische Aufheller kommen in Betracht.

Unter Reaktivfarbstoffen versteht man Farbstoffe, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen.

Geeignete Reaktivgruppen, welche mindestens einen abspaltbaren Substituenten an einen heterocyclischen Rest gebunden enthalten, sind unter anderem solche, die mindestens einen reaktiven Substituenten an einen 5- oder 6- gliedrigen heterocyclischen Ring gebunden enthalten, wie an einen Monazin-, Diazin-, Triazin-, z. B. Pyridin-, Pyrimidin-, Pyridazin-, Thiazin-, Oxazin oder asymmetrischen oder symmetrischen Triazinring, oder an ein derartiges Ringsystem, welches einen oder mehrere ankondensierte Ringe aufweist, wie ein Chinolin-, Phthalazin-, Cinnolin-, Chinazolin-, Chinoxalin-, Acridin-, Phenazin- oder Phenanthridin-Ringsystem; die 5- oder 6gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6gliedrige carbocyclische Ringe ankondensiert enthalten können.

Unter den reaktiven Substituenten am Heterocyclus sind beispielsweise zu erwähnen:
Halogen (Cl, Br oder F), Azido-(N₃), Rhodanido, Thio, Thioether, Oxyether.

Bevorzugt sind im Fall der vorliegenden Erfindung Reaktivfarbstoffe mit Reaktivgruppen auf Basis folgender Systeme:
Mono- oder Dihalogen-symmetrische Triazinylreste, Mono-, Di- oder Trihalogenpyrimidinylreste oder halogensubstituierte Chinoxalinylcarbonylreste.

Bevorzugt sind Reaktivgruppen der Formeln 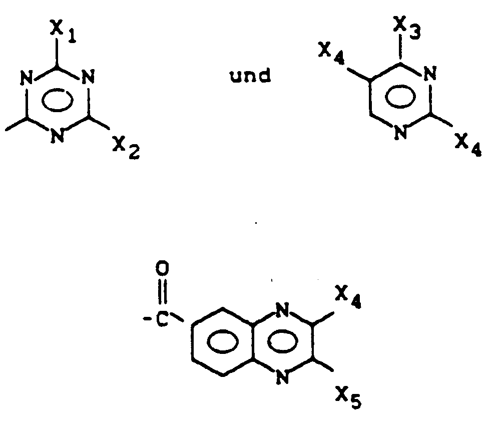
worin
- X₁ =: F
- X₂ =: Cl, F, NH₂, NHR, OR, CH₂R, SR
- X₃ =: Cl, F, CH₃
- X₄ =: Cl, F
- X₅ =: Cl, F, CH₃
wobei
- R =: Alkyl (insbesondere gegebenenfalls durch OH, SO₃H, COOH, substituiertes C₁-C₄-Alkyl), Aryl (insbesondere gegebenenfalls durch SO₃H, C₁-C₄-Alkyl, C₁-C₄-Alkoxy substituiertes Phenyl), Aralkyl (insbesondere gegebenenfalls durch SO₃H, C₁-C₄-Alkyl, C₁-C₄-Alkoxy substituiertes Benzyl).

Farbstoffe, welche die obengennanten Reaktivgruppensysteme enthalten, sind beispielsweise aus folgenden Publikationen bekannt:
US-A 3 377 336, US-A 3 527 760
GB-A 1 169 254, US-A 3 669 951
DE-B 1 644 208, GB-A 1 188 606
DE-A 2 817 780, ES-A 479 771

Unter den nicht heterocyclischen Reaktivresten sind beispielsweise zu erwähnen β-Chlorethylsulfonyl, β-Acetoxyethylsulfonyl, β-Sulfatoethylsulfonyl, β-Thiosulfatoethylsulfonyl, β-Sulfatoethylsulfonylmethylamino und Vinylsulfonylmethylamino-Gruppen.

Die Reaktivfarbstoffe können auch Kombinationen zweier Reaktivreste enthalten.

Als anionische Farbstoffadditive kommen in Betracht: insbesondere anionische Dispergiermittel, beispielsweise seien genannt: Alkaliligninsulfonate, Kondensationsprodukte aus Phenolen. Formaldehyd und Sulfiten, Sulfobernsteinsäurederivate oder Kondensationsprodukte aus aromatischen Sulfosäuren und Formaldehyd wie beispielsweise Naphthalinsulfonsäuren, Ditolylethersulfonsäuren oder Terphenylsulfonsäuren mit Formaldehyd.

Gemäß einer bevorzugten Verfahrensvariante wird eine salzhaltige Lösung anionischer Farbstoffe oder Farbstoffadditive mit einer Wirkstoffkonzentration von 1-15, vorzugsweise 3-10 Gew.-%, auf < 1 Gew.-% anorg. Salze über ein Membrantrennverfahren entsalzt und anschließend wird das Retentat zwecks Kationenaustausch über das Austauscherharz geführt und mit einer Base, welche die zur Löslichkeitsverbesserung dienenden Kationen spendet, neutralisiert (beispielsweise LiOH, Li₂CO₃, Ammoniak, Amine und/oder Alkanolamine). Danach kann, falls erwünscht. eine weitere Aufkonzentrierung der Farbstoff- oder Dispergiermittel-Lösung erfolgen.

Zweckmäßigerweise werden bei dem Kationenaustausch die die Schwerlöslichkeit verursachenden Ionen (im allgemeinen Na⁺) nicht quantitativ gegen die Löslichkeit verbessernden Ionen (z. B. Li⁺) ausgetauscht. Es hat sich vielmehr gezeigt, daß solche Lösungen eine optimale Lagerstabilität aufweisen, in denen Mischsalze der Wirkstoffe mit einem Li⁺/Na⁺- Molverhältnis von 3:1 bis 1:3, vorzugsweise annähernd 1:1, vorliegen.

Die nach dem erfindungsgemäßen Verfahren erhältlichen konzentrierten Flüssigeinstellungen weisen im allgemeinen folgende Zusammensetzung auf:
- 7 - 35 Gew.-%: anionischer Farbstoff oder Additiv,
- 0 - 30 Gew.-%: löslichkeitserhöhende wassermischbare organische Verbindungen und/oder andere übliche Zusatzstoffe,
- 0 - 5 Gew.-%: anorganische Salze, bevorzugt < 2 Gew.-%,
- 0 - 5 Gew.-%: Puffersubstanzen,
- Rest:: Wasser

Bevorzugte Verfahrensprodukte sind derartige Lösungen von Reaktivfarbstoffen, mit einem Na⁺/Li⁺-Verhältnis der obengenannten Art.

Als löslichkeitserhöhende wassermischbare organische Verbindungen seien beispielsweise genannt: ethoxylierte Ammoniumverbindungen, niedere aliphatische oder cyclische Amide, bevorzugt ε-Caprolactam und N-Methylpyrrolidon und/oder niedere aliphatische Sulfoxide und/oder schwefelhaltige Verbindungen wie Dimethylsulfon, Diethylsulfon, Sulfolan, Sulfolen und deren in α- und/oder β-Stellung substituierten Derivate und/oder hydrotrope Verbindungen, wie Thioharnstoff und Harnstoff sowie deren Derivate. Besonders bevorzugt ist N,N'Dimethylharnstoff. Bei Anwendung nicht reaktiver Farbstoffe sind desweiteren Mischungen mit Aminen wie z. B. Triethylamin, Triethanolamin und ähnlicher Derivate sowie Mischungen mit Glykolen und deren Ether einsetzbar.

Geeignet sind ferner als Zusatzstoffe nichtionogene Tenside, wie langkettige oxethylierte Amine, Alkohole und Phenole sowie anorg. oder org. Säuren, wie beispielsweise Ameisensäure, Methansulfonsäure, Essigsäure, Zitronensäure oder Milchsäure.

Die Lösungen können, falls sie als konzentrationserhöhende Zusatzstoffe feste Produkte enthalten, in üblicher Weise gegebenenfalls nach Zusatz üblicher Einstellmittel zum Trocknen gebracht werden, beispielsweise durch Sprühtrocknung. Man erhält dabei salzarme Pulver- bzw. Granulatformulierungen mit verbesserter Löslichkeit.

Als Einstellmittel kommen übliche Einstellmittel, d.h. feste Verbindungen in Frage, die keine Reaktion mit der Reaktivgruppe eingehen wie z. B. Polyphosphate, vorzugsweise aber Nichtelektrolyte wie Polyvinylpyrrolidon, Harnstoff, Salze von wasserlöslicher aromatischer Sulfosäure wie Benzolsulfonsäure und anionische Dispergiermittel wie sulfatierte primäre oder sekundäre aliphatische Alkohole mit 10 bis 18 Kohlenstoffatomen, sulfatierte Fettsäureamide, sulfatierte Alkylenoxyaddukte, sulfatierte partiell veresterte mehrwertige Alkohole und vor allem Sulfonate wie langkettige Alkylsulfonate, beispielsweise Laurylsulfonat, Stearylsulfonat, Mersolate, Natriumdialkylsulfosuccinate, wie Natriumdioctylsulfosuccinat, wie Tauride, beispielsweise Oleylmethyltaurid (Natriumsalz), Alkylarylsulfonate wie Alkylbenzolsulfonate mit geradkettiger oder verzweigter Alkylkette mit 7 bis 20 Kohlenstoffatomen und Mono- und Dialkylnaphthalinsulfonate wie Nonylbenzolsulfonat, Dodecylbenzolsulfonat und Hexadecylbenzolsulfonat sowie 1-Isopropylnaphthalin-2-sulfonat, Diiso-propylnaphthalinsulfonat und insbesondere Kondensationsprodukte aus aromatischen Sulfonsäuren und Formaldehyd wie Naphthalinsulfonsäuren, Ditolylethersulfonsäuren oder Terphenylsulfonsäuren mit Formaldehyd und/oder Kondensationsprodukte aus Cyclohexanon, Formaldehyd und Bisulfit und/oder Ligninsulfonate. Weiterhin können noch übliche Entstaubungsmittel wie Öle, Öl/Emulgator-Mischungen oder Phthalsäureester zugesetzt werden.

Die nach dem erfindungsgemäßen Verfahren erhaltenen Produkte finden vielerlei Verwendung, z. B. für die Zubereitung von Färbebädern oder Druckpasten zum Färben von natürlichen und synthetischen Substraten, insbesondere Baumwolle, Wolle, Regeneratcellulose, Papier und Leder.

Die nach dem erfindungsgemäßen Verfahren erhältlichen konzentrierten Lösungen von Mischsalzen anionischer Farbstoffe (bevorzugt Reaktivfarbstoffe) bzw. Farbstoffadditive, die praktisch frei von Stellmitteln sind (d. h. mit einem Gehalt unterhalb 2 Gew.-%), sind neu und deshalb ebenfalls Gegenstand dieser Erfindung.

Derartige Mischsalze entsprechen der allgemeinen Formel

[A]^{m⊖}Bᵣ^{n⊕}Dₚ^{⊕}

worin
- A =: Anion eines Reaktivfarbstoffs der eine oder zwei gleiche oder verschiedene Reaktivgruppen der Formeln 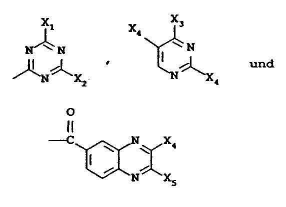
worin
- X₁: = F
- X₂ =: Cl, F, NH₂, NHR, OR, CH₂R, SR
- X₃ =: Cl, F, CH₃
- X₄=: Cl, F
- X₅ =: Cl, F, CH₃
wobei
- R=: Alkyl, insbesondere gegebenenfalls durch OH, SO₃H, COOH substituiertes C₁-C₄-Alkyl; Aryl, insbesondere gegebenenfalls durch SO₃H, C₁-C₄-Alkyl, C₁-C₄-Alkoxy substituiertes Phenyl; Aralkyl, insbesondere gegebenenfalls durch SO₃H, C₁-C₄-Alkyl, C₁-C₄-Alkoxy substituiertes Benzyl,
enthält, und
- B =: Na, K, Ca oder deren Mischungen,
- D =: H, NZ₃, NZ₄ oder vorzugsweise Li
- Z =: gegebenenfalls subst. Alkyl,
- m =: ganze Zahl von 1-6,
- r/p =: ganze Zahl von 1-5, wobei p + r.n = m,
- n =: 1 oder 2
bedeuten, und wobei im Falle daß B = Na und D = Li das Verhältnis von D zu B 3:1 bis 1:3 beträgt.

Vorzugsweise stehen
- B: für Na und
- D: für NZ₃, NZ₄ und insbesondere Li.

Geeignete Alkylreste Z sind C₁-C₄-Alkylreste, die durch OH, C₁-C₄-Alkoxy oder -(E-O)_{q}-Z' substituiert sein können, wobei E = Alkylen (z. B. C₂H₄), Z'H (oder C₁-C₄-Alkyl) und q 2-10 bedeuten.

Gegenüber den aus GB-A 1 318 111 bekannten Farbstoffpräparationen, bestehend im wesentlichen aus dem Na-Salz eines Reaktivfarbstoffs und einem anorganischen Li-Salz als Stellmittel, zeichnen sich die erfindungsgemäßen Mischsalze durch eine bessere Lagerstabilität der daraus hergestellten konzentrierten wäßrigen Lösungen aus.

### Beispiel 1

1140 g Preßkuchen, der 35 Gew.-% Reaktivfarbstoff der Formel (1) und 15 Gew.-% NaCl enthält, werden in 8860 g Wasser gelöst. Dieser Lösung 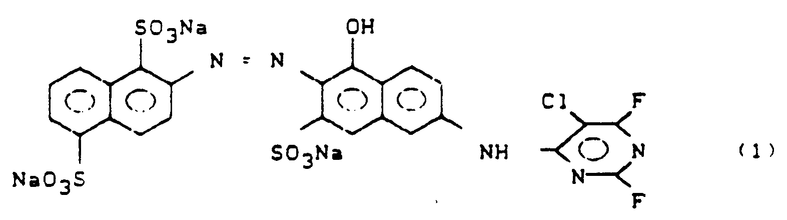
werden bei Raumtemperatur und 40 bar auf einem Druckpermeationslaborgerät mit 0,36 m² einer Membran eines aromatischen Polysulfon-Derivates mit Trenngrenze ca. 8000 MG während 150 min kontinuierlich bei Zugabe von 20 l dest. Wasser 20 l nahezu farbstoff-freies salzhaltiges Permeat entzogen. Anschließend werden die 10 l 4 % Reaktivfarbstoff (1) enthaltende Retentat-Lösung über eine Säule, gefüllt mit 1,5 l eines stark sauren vernetzten Polystyrol-Kationenaustauschers gegeben. Nach Neutralisation mit LiOH·H₂O werden der Lösung erneut auf dem Druckpermeationslaborgerät 7,9 l farbstoff-freies Permeat abgezogen. Nach Zugabe von 110 g ε-Caprolactam erhält man eine auch in der Kälte lagerstabile Lösung, die 18 Gew.-% des Reaktivfarbstoffs der Formel (2) als "Mischsalz Na⁺/Li^{+''}enthält.

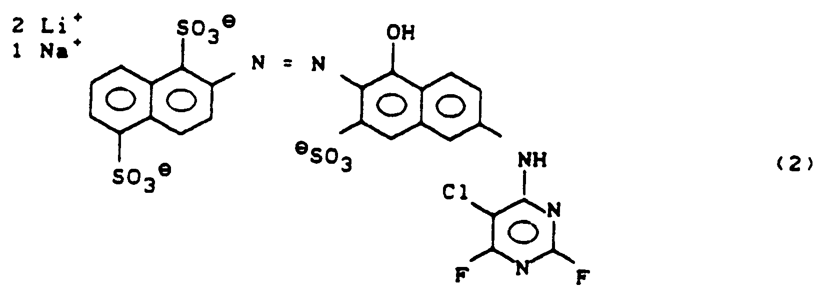

Nach Zusatz der für die Reaktivfärberei üblichen Hilfsmittel kann mit dieser Lösung Baumwolle in bekannter Weise gefärbt werden.

### Beispiel 2

Man verfährt wie in Beispiel1, jedoch sind in der Ausgangslösung 3 % Reaktivfarbstoff der Formel (3), 1,5 Gew.-% Dicyandiamid und 1,5 Gew.-% NaCl enthalten. Die Menge an Kationenaustauscher beträgt 1 l. Nach dem Kationenaustausch gegen H⁺ wird mit LiOH·H₂O neutralisiert und auf 3 l aufkonzentriert. Nach Zugabe von 45 g Dicyandiamid und 10 g Boratpuffer erhält man eine lagerstabile Lösung, die 10 Gew.-% Reaktivfarbstoff der Formel (4) enthält.

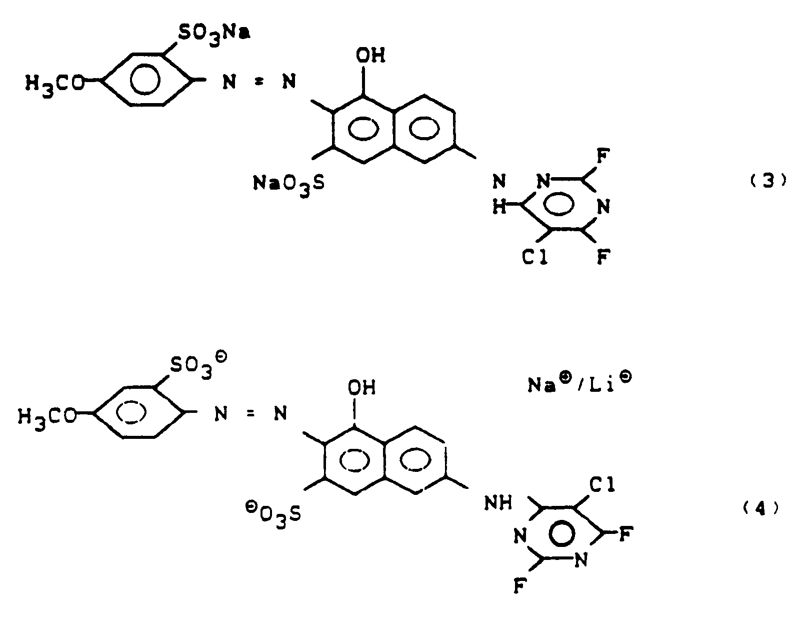

### Beispiele 3-10

Man verfährt wie in Beispiel 1, verwendet jedoch Ausgangslösungen, die 3 % der Farbstoffe (5) - (12) sowie ca. 2 % NaCl enthalten. Von dem Kationenaustauscher werden 1,5 l eingesetzt. Nach dem Austausch gegen H⁺ wird mit LiOH·H₂O neutralisiert und aufkonzentriert. Nach Zusatz der in Tabelle 1 aufgeführten Lösevermittler und 0,5 Gew.-% Boratpuffer erhält man in allen Fällen, selbst in der Kälte, lagerstabile Lösungen der Reaktivfarbstoffe, die jetzt in Form von Na⁺/Li⁺-Mischsalzen vorliegen.

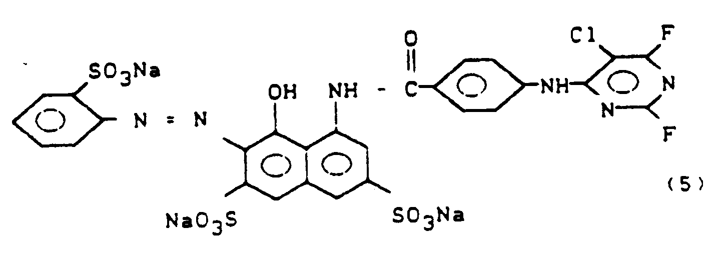

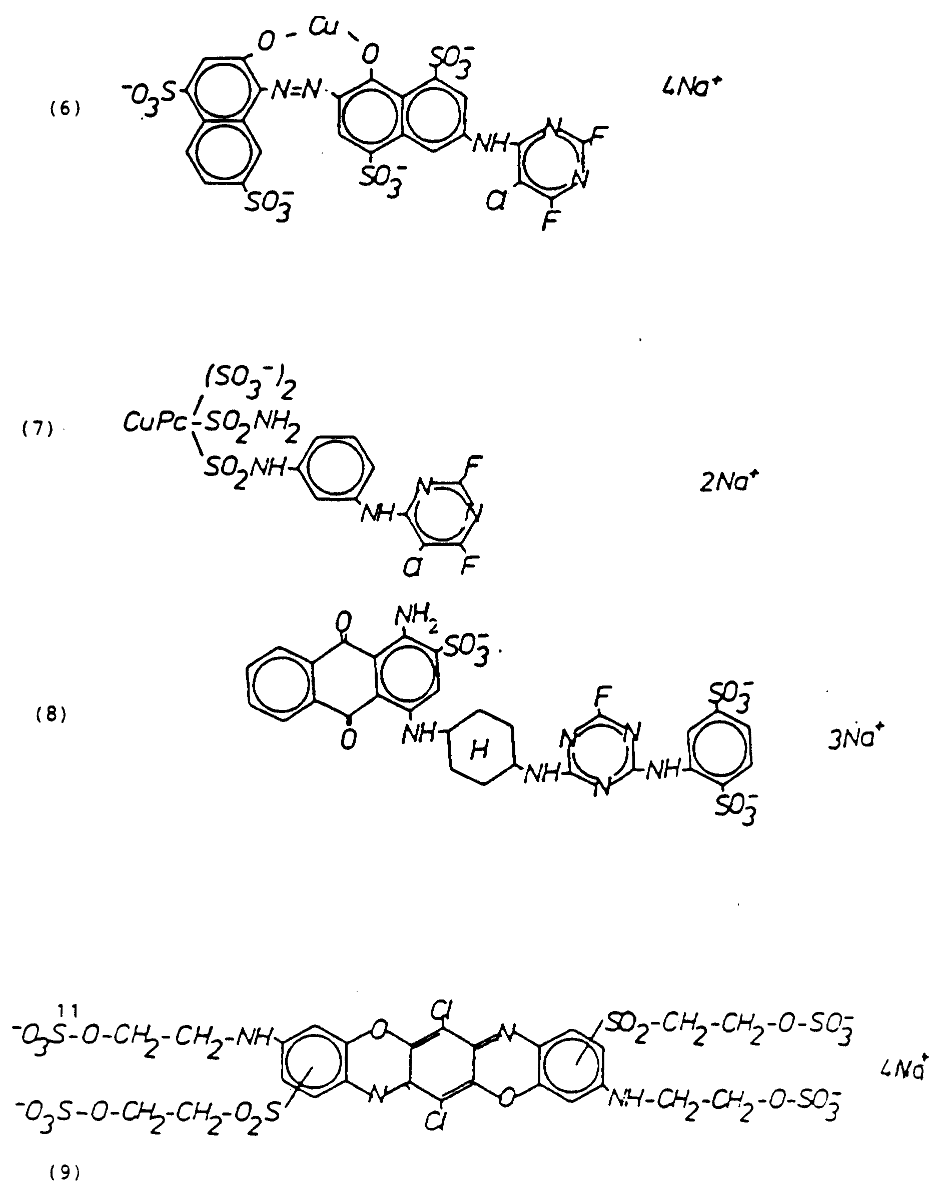

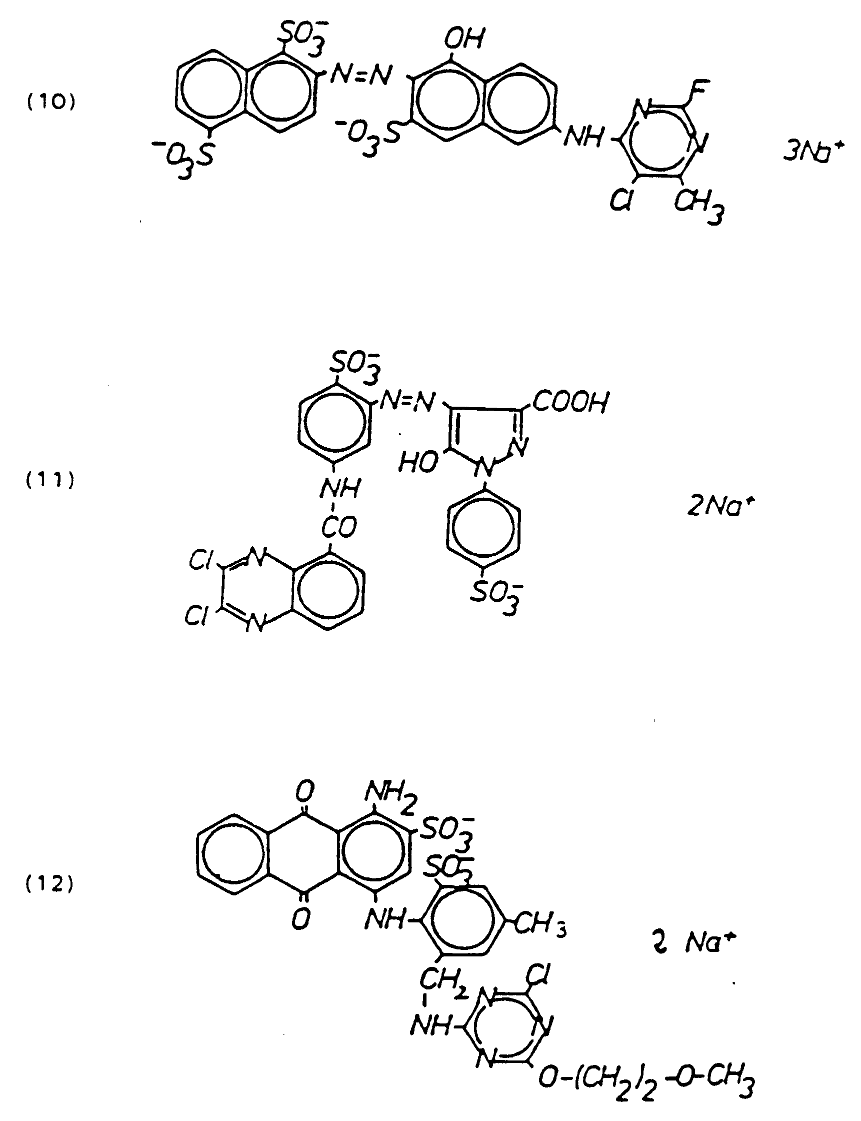

**Tabelle 1**

| Bsp. | Farbstoff-Gehalt | Lösevermittler | Li^{⊕}/Na^{⊕} |
|---|---|---|---|
| 3 | 12 % | 15 % ε-Caprolactam | 1:1 |
| | | 3 % Dicyandiamid | |
| 4 | 11 % | 20 % ε-Caprolactam | 1:3 |
| 5 | 18 % | 20 % ε-Caprolactam | 1:1 |
| 6 | 15 % | 15 % ε-Caprolactam | 2:1 |
| | | 3 % Methylpyrrolidon | |
| 7 | 10 % | 3 % Dicyandiamid | 1:1 |
| 8 | 15 % | - | 2:1 |
| 9 | 20 % | - | 1:1 |
| 10 | 20 % | 20 % N,N'-Dimethylharnstoff | 1:1 |

### Beispiele 11-20

Es wird verfahren nach Beispiel 1, jedoch wird als Membran eine Polysulfon-Membran gemäß EP-A 61424 verwendet. Als Reaktivfarbstoff wird die Verbindung (12) verwendet.

### Beispiel 21

Es wird verfahren nach Beispiel 1, nur daß in der Ausgangslösung 5 % Reaktivfarbstoff der Formel (7), 16 % ε-Caprolactam und 15 % NaCl enthalten sind. Nach Entsalzung und Ionenaustausch wird die Lösung auf 20 % Farbstoff aufkonzentriert. Die erhaltene Flüssigpräparation ist nach Zugabe von 10 % ε-Caprolactam und 0,5 % Boratpuffer über Monate lagerstabil.

### Beispiel 22

1 l einer Lösung enthaltend 3 Gew.-% Reaktivfarbstoff der Formel (9) mit einem Anteil von 10 % Ca-Ionen und 90 % Na-Ionen, 0.2 Gew.-% CaSO₄ und 0,5 Gew.-% Na₂SO₄ werden über eine Säule, gefüllt mit 0,3 l eines stark sauren vernetzten Polystyrol-Kationenaustauschers gegeben. Nach Neutralisation auf pH = 5 mit LiOH·H₂O kann die Farbstofflösung auf einem Labor-Druckpermeationsgerät gemäß Beispiel 1 mit 3 l entsalztem Wasser entsalzt und auf ca. 12 Gew.-% Farbstoffgehalt aufkonzentriert werden.

### Beispiel 23

10 l einer Lösung enthaltend 2 Gew.-% Farbstoff der Formel (13) und 1,5 Gew.-% NaCl werden 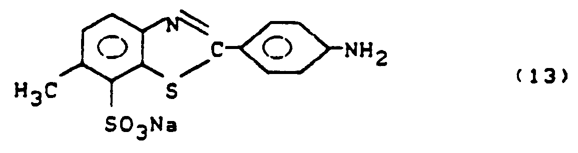
auf einem Labor-Druckpermeationsgerät gemäß Beispiel 1 mit 20 l entsalztem Wasser entsalzt und durch eine mit 1,5 l stark saurem Polystyrolkationenaustauscherharz gefüllte Säule gegeben. Die Lösung wird anschließend mit einem Kondensationsprodukt aus Triethanolamin mit 3 mol Ethylenoxid neutralisiert. Nach Aufkonzentrierung auf 2 l erhält man eine Lösung, die 10 Gew.-% Farbstoff der Formel (14) enthält.

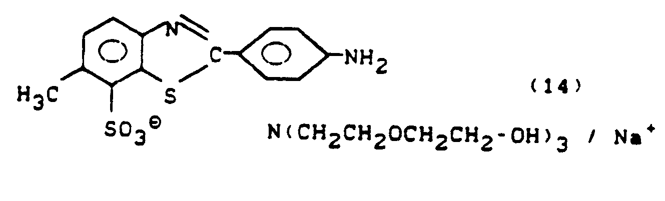

### Beispiel 24

Es wird verfahren gemäß Beispiel 23, nur daß in der Ausgangslösung 2 % Farbstoff der Formel (15) enthalten sind. Die auf 1 l aufkonzentrierte, gemäß Beispiel 23, neutralisierte salzfreie Farbstofflösung wird durch Zugabe von 40 Gew.-% Diethylenglykolmonoethylether stabilisiert.

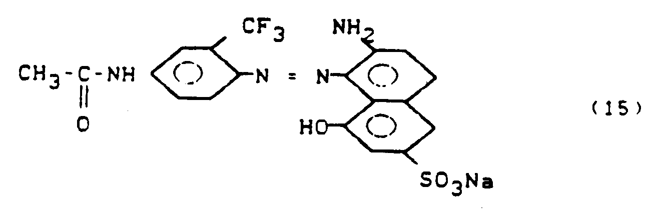

## Patentansprüche

1. Verfahren zur Herstellung konzentrierter wäßriger Lösungen von anionischen Farbstoffen und anionischen Farbstoffadditiven ausgehend von Lösungen oder Dispersionen dieser Stoffe durch Austausch der die Schwerlöslichkeit verursachenden Kationen durch die Löslichkeit verbessernden Kationen ohne Zwischenisolierung der den Farbstoffen bzw. Additiven zugrundeliegenden freien Säuren, dadurch gekennzeichnet, daß man die Lösungen oder Dispersionen mit einem Membrantrennverfahren auf einen Salzgehalt ≦ 5 Gewichtsprozent entsalzt, anschließend das Retentat zwecks Kationenaustausch über einen im Reaktionsmedium unlöslichen Ionenaustauscher in Perl- oder Granulatform führt und mit einer Base, welche die zur Löslichkeitsverbesserung dienenden Kationen spendet, neutralisiert.

2. Verfahren nach Anspruch 1, dadurch gekennzeichnet, daß Lösungen bzw. Dispersionen von Reaktivfarbstoffen behandelt werden.

3. Verfahren nach Anspruch 1 oder 2, dadurch gekennzeichnet, daß man zusätzlich die mit den Ionenaustauschern behandelten salzarmen Lösungen bzw. Dispersionen anschließend mittels eines Membrantrennverfahrens aufkonzentriert.

4. Verfahren nach Anspruch 1 bis 3, dadurch gekennzeichnet, daß man als Ionenenaustauscher stark saure Harze auf der Basis von Polystyrolsulfonsäuren oder Phenol-/Formaldehydkondensaten verwendet.

5. Verfahren nach Anspruch 2 bis 4, dadurch gekennzeichnet, daß man Porenmembranen aus Polysulfon, Polyamid, Polystyrol oder Polyvinylidenfluorid verwendet, die ionische Gruppen, vorzugsweise in Form von Farbstoffmolekülen, enthalten.

6. Verfahren nach Anspruch 1 bis 5, dadurch gekennzeichnet, daß man die Na^{⊕}-Ionen von Farbstoff- oder Farbstoffadditivsalzen nur teilweise gegen Li^{⊕} und/oder NZ₃ und/oder NZ₄ mit Z = H oder gegebenenfalls substituiertes Alkyl austauscht.

7. Verfahren nach Anspruch 6, dadurch gekennzeichnet, daß man die Na-Ionen von Reaktivfarbstoffsalzen gegen Li austauscht, vorzugsweise nur so weit, daß sich ein Li^{⊕}/Na^{⊕}-Molverhältnis von 3:1 bis 1:3 einstellt.

8. Verfahren nach Anspruch 1 bis 7, dadurch gekennzeichnet, daß man Lösungen der Zusammensetzung
7-35 Gew.-% anionischer Farbstoff oder Additiv
0-30 Gew.-% löslichkeitserhöhende wassermischbare organische Verbindungen und/öder andere übliche Zusatzstoffe
0- 5 Gew.-% anorganische Salze
0- 5 Gew.-% Puffersubstanzen
Rest: Wasser
herstellt.

9. Konzentrierte Lösungen, die praktisch frei von Stellmitteln sind, enthaltend Mischsalze der Formel
[A]^{m⊖}Bᵣ^{n⊕}Dₚ^{⊕}
worin
A = Anion eines Reaktivfarbstoffs der eine oder zwei gleiche oder verschiedene Reaktivgruppen der Formeln 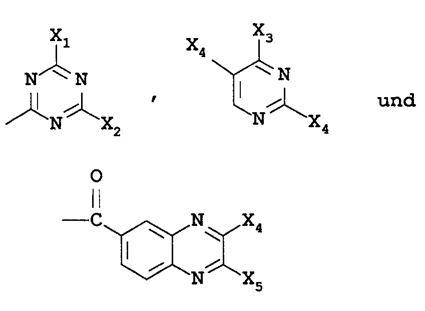
worin
X₁ = F
X₂ = Cl, F, NH₂, NHR, OR, CH₂R, SR
X₃ = Cl, F, CH₃
X₄ = Cl, F
X₅ = Cl, F, CH₃
wobei
R = Alkyl, insbesondere gegebenenfalls durch OH, SO₃H, COOH substituiertes C₁-C₄-Alkyl; Aryl, insbesondere gegebenenfalls durch SO₃H, C₁-C₄-Alkyl, C₁-C₄-Alkoxy substituiertes Phenyl; Aralkyl, insbesondere gegebenenfalls durch SO₃H, C₁-C₄-Alkyl, C₁-C₄-Alkoxy substituiertes Benzyl,
enthält, und
B = Na, K, Ca oder deren Mischungen,
D = H, NZ₃, NZ₄ oder vorzugsweise Li
Z = gegebenenfalls subst. Alkyl,
m = ganze Zahl von 1-6,
r/p = ganze Zahl von 1-5, wobei p + r.n = m,
n = 1 oder 2
bedeuten, und wobei im Falle daß B = Na und D = Li das Verhältnis von D zu B 3:1 bis 1:3 beträgt.

10. Verwendung der konzentrierten Lösungen gemäß Anspruch 9 oder erhalten gemäß Anspruch 1 bis 9 zur Herstellung von Färbebädern oder Druckpasten zum Färben von Baumwolle, Wolle, Regeneratcellulose, Papier oder Leder.

## Claims

1. Process for the preparation of concentrated aqueous solutions of anionic dyestuffs and anionic dyestuff additives, using, as starting materials, solutions or dispersions of these substances, by replacing the cations causing sparing solubility by cations which improve solubility without intermediate isolation of the free acids on which the dyestuffs or additives are based, characterised in that the salts are removed from the solutions or dispersions down to a salt content of ≦ 5 per cent by weight using a membrane separation process, the retentate is then passed for the purpose of cation exchange over an ion exchanger in the form of beads or granules which is insoluble in the reaction medium, and neutralised with a base which donates the cations which serve to improve solubility.

2. Process according to Claim 1, characterised in that solutions or dispersions of reactive dyestuffs are treated.

3. Process according to Claim 1 or 2, characterised in that the solutions or dispersions of low salt content which have been treated with the ion exchangers are then in addition concentrated by means of a membrane separation process.

4. Process according to Claim 1 to 3, characterised in that the ion exchangers used are strongly acid resins based on polystyrenesulphonic acids or phenol/formaldehyde condensation products.

5. Process according to Claim 2 to 4, characterised in that pore membranes composed of polysulphone, polyamide, polystyrene or polyvinylidene fluoride and containing ionic groups, preferably in the form of dyestuff molecules, are used.

6. Process according to Claim 1 to 5, characterised in that the Na^{⊕} ions of dyestuff salts or dyestuff additive salts are only partly replaced by Li^{⊕} and/or NZ₃ and/or NZ₄ in which Z = H or optionally substituted alkyl.

7. Process according to Claim 6, characterised in that the Na ions of reactive dyestuff salts are replaced by Li, preferably only to such an extent that an Li^{⊕}/Na^{⊕} molar ratio of 3:1 to 1:3 is set up.

8. Process according to Claim 1 to 7, characterised in that solutions of the composition
7-35% by weight of anionic dyestuff or additive,
0-30% by weight of water-miscible organic compounds which increase solubility and/or other customary additives,
0- 5% by weight of inorganic salts,
0- 5% by weight of buffer substances,
remainder: water
are prepared.

9. Concentrated solutions which are virtually free from extenders and contain mixed salts of the formula
[A]^{m⊖}Bᵣ^{n⊕}Dₚ^{⊕}
wherein
A = anion of a reactive dye containing one or two identical or different reactive groups of the formulae 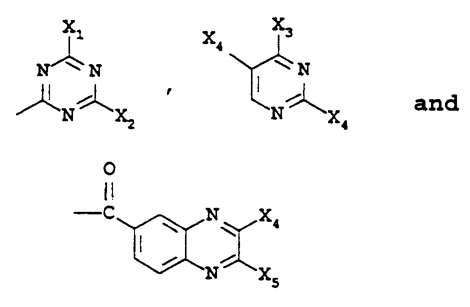
in which
X₁ = F
x₂ = Cl, F, NH₂, NHR, OR, CH₂R or SR
X₃ = Cl, F or CH₃
X₄ = Cl or F
x₅ = Cl, F or CH₃,
where
R = alkyl, in particular C₁-C₄-alkyl which is optionally substituted by OH, SO₃H or COOH; aryl, in particular phenyl which is optionally substituted by SO₃H, C₁-C₄-alkyl or C₁-C₄-alkoxy; arylalkyl, in particular benzyl which is optionally substituted by SO₃H, C₁-C₄-alkyl or C₁-C₄-alkoxy, and
B = Na, K, Ca or mixtures thereof,
D = H, NZ₃, NZ₄ or preferably Li
Z = optionally substituted alkyl,
m = integer from 1-6,
r/p = integer from 1-5, where p + r.n = m,
n = 1 or 2,
and where, in the case where B = Na and D = Li, the ratio between D and B is from 3:1 to 1:3.

10. The use of the concentrated solutions according to Claim 9 or obtained in accordance with Claim 1 to 9 for the preparation of dyebaths or printing pastes for dyeing cotton, wool, regenerated cellulose, paper or leather.

## Revendications

1. Procédé pour préparer des solutions aqueuses concentrées de colorants anioniques et d'additifs pour colorants anioniques, à partir de solutions ou de dispersions de ces substances par échange des cations provoquant une solubilité difficile et que l'on remplace par des cations améliorant la solubilité, sans isolement intermédiaire des acides libres se trouvant à la base des colorants ou des additifs, procédé caractérisé en ce qu'on dessale, jusqu'à une teneur en sels égale ou inférieure à 5 % en poids, les solutions ou dispersions à l'aide d'un procédé de séparation sur membrane, puis l'on achemine le rétentat, pour un échange de cations sur un échangeur d'ions insoluble dans le milieu de réaction et sous forme de perles ou de granules, et l'on neutralise avec une base qui fournit les cations servant à améliorer la solubilité.

2. Procédé selon la revendication 1, caractérisé en ce qu'on traite des solutions ou dispersions de colorants réactifs.

3. Procédé selon la revendication 1 ou 2, caractérisé en ce qu'on soumet en outre les solutions ou dispersions, traitées par les échangeurs, ensuite à une concentration à l'aide d'un procédé de séparation sur membrane.

4. Procédé selon les revendications 1 à 3, caractérisé en ce qu'on utilise comme échangeur d'ions des résines fortement acides, à base d'acides polystyrènesulfoniques ou de produits de condensation phénol/formaldéhyde.

5. Procédé selon les revendications 2 à 4, caractérisé en ce qu'on utilise des membranes poreuses en polysulfone, en polyamide, en polystyrène ou en poly(fluorure de vinylidène), qui contiennent les groupes ioniques, avantageusement sous forme de molécules de colorant.

6. Procédé selon les revendications 1 à 5, caractérisé en ce qu'on provoque le remplacement partiel seulement des ions Na⁺ des sels de colorants ou des sels d'additifs pour colorants par Li⁺ et/ou par NZ₃ et/ou par NZ₄, le symbole Z représentant H ou un groupe alkyle éventuellement substitué.

7. Procédé selon la revendication 6, caractérisé en ce qu'on remplace les ions Na des sels de colorants réactifs par Li, en opérant avantageusement dans une limite telle que l'on ajuste le rapport molaire Li⁺/Na⁺ à une valeur comprise entre 3:1 et 1:3.

8. Procédé selon les revendications 1 à 7, caractérisé en ce qu'on prépare des solutions ayant pour composition:
7 à 35 % en poids d'un colorant anionique ou d'un additif pour colorant,
0 à 30 % en poids de composes organiques miscibles à l'eau et augmentant la solubilité' dans l'eau et/ou d'autres additifs usuels,
0 à 5 % en poids de sels minéraux,
0 à 5 % en poids de substances tampon,
le reste étant constitué par de l'eau.

9. Solutions concentrées, qui sont pratiquement dépourvues d'agents d'ajustement ou de réglage et qui contiennent des sels mixtes de formule :
[A]^{m⊖}Bᵣ^{n⊕}Dₚ^{⊕}
dans laquelle
A représente l'anion d'un colorant réactif qui contient 1 ou 2 groupes réactifs identiques ou différents de formules: 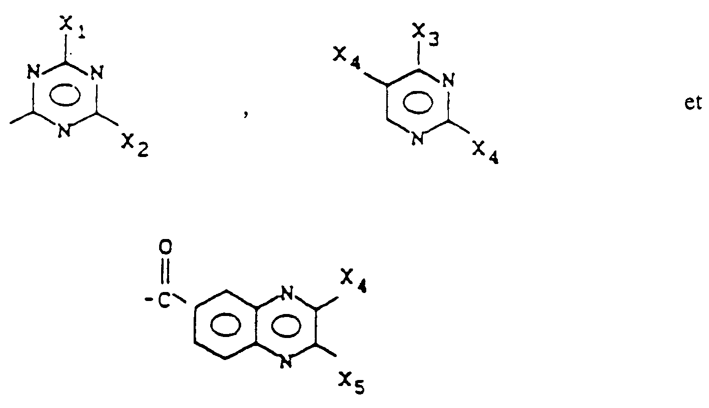 où
X₁ représente F,
X₂ représente Cl, F, NH₂, NHR, OR, CH₂R, SR,
X₃ représente Cl, F, CH₃,
X₄ représente Cl, F,
X₅ représente Cl, F, CH₃,
où
R représente un groupe alkyle, en particulier un groupe alkyle en C₁-C₄, éventuellement substitué par OH, SO₃H, COOH; un groupe aryle, en particulier un groupe phényle éventuellement substitué par SO₃H, alkyle en C₁-C₄, alcoxy en C₁-C₄; un groupe aralkyle, en particulier un groupe benzyle éventuellement substitué par SO₃H, alkyle en C₁-C₄, alcoxy en C₁-C₄,
et
B représente Na, K, Ca ou leurs mélanges,
D représente H, NZ₃, NZ₄ ou de préférence Li,
Z représente un groupe alkyle éventuellement substitué,
m est un nombre entier valant de 1 à 6,
le rapport r/p est un nombre entier valant de 1 à 5, et p+r.n=m,
n vaut 1 ou 2, et
dans le cas où B représente Na et D représente Li, le rapport de D à B est de 3:1 à 1:3.

10. Utilisation des solutions concentrées selon la revendication 9 ou obtenues selon l'une des revendications 1 à 9 pour préparer des bains de teinture ou des pâtes d'impression pour la teinture du coton, de la laine, d'une cellulose régénérée, du papier ou du cuir.
